# EUROPEAN PATENT APPLICATION

(11) **EP 4 614 708 A1**
(43) Date of publication of application: **10.09.2025**
(21) Application number: 25161401.2
(22) Date of filing: 03.03.2025
(51) Int. Cl.: H01M 50/342, H01M 50/103, H01M 50/15

(54) **BATTERY CELL AND MANUFACTURING METHOD OF BATTERY CELL CASE**

(30) Priority: 04.03.2024 KR 20240030732
(71) Applicant: SK On Co., Ltd., Seoul 03161 (KR)
(72) Inventor: Cheong, Hoemin, Daejeon 34124 (KR)
(74) Representative: Stolmár & Partner Patentanwälte PartG mbB

(57) **Abstract**

The present disclosure relates to a battery cell comprising a case body accommodating an electrode assembly, a case cover covering at least one face of the case body which is open, and a vent notch portion formed by being recessed at at least one of one surface of the case body or one surface of the case cover. The vent notch portion includes a straight portion having a straight pattern, and a curved portion connected to the straight portion and having a curved pattern. A width of the straight portion is different from a width of the curved portion.

## Description

### BACKGROUND

### 1. Technical Field

Various embodiments of the present disclosure generally relate to a battery cell and a manufacturing method of a battery cell case.

### 2. Related Art

Recently, research on battery cells has been actively conducted. Battery cells convert electrical energy into chemical energy and store it and can be reused multiple times by charging and discharging. Due to their economical and eco-friendly nature, battery cells are widely used in a variety of industries.

On the other hand, as the battery cells are repeatedly charged and discharged, the internal pressure increases and a large amount of heat is generated, causing a swelling phenomenon. This swelling phenomenon can lead to explosion or fire, so a solution to control the internal pressure of the battery cell is required.

### SUMMARY

One aspect of embodiments of the present disclosure includes a battery cell with increased stability by adjusting the internal pressure.

Another aspect of embodiments of the present disclosure includes a battery cell comprising a vent notch portion having a uniform depth.

Another aspect of embodiments of the present disclosure includes a method of manufacturing a battery cell case with improved production efficiency by manufacturing a vent notch portion integrally with the case.

Various embodiments of the present disclosure can be widely applied in the green technology fields such as electric vehicles, battery charging stations, energy storage systems (ESSs), and other technologies using batteries such as photovoltaics and wind power.

In addition, various embodiments of the present disclosure can also be used for eco-friendly mobility, including electric and hybrid vehicles, to reduce air pollution and greenhouse gas emissions to prevent or reduce climate change.

A battery cell according to embodiments of the present disclosure includes a case body accommodating an electrode assembly, a case cover covering at least one face of the case body which is open, and a vent notch portion formed by being recessed at at least one of one surface of the case body or one surface of the case cover. The vent notch portion includes a straight portion having a straight pattern, and a curved portion connected to the straight portion and having a curved pattern. A width of the straight portion is different from a width of the curved portion.

According to an embodiment, the width of the straight portion may be smaller than the width of the curved portion at the one surface of the case body or the one surface of the case cover at which the vent notch portion is formed.

According to an embodiment, a depth of the straight portion may be the same as a depth of the curved portion.

According to an embodiment, the vent notch portion may further include a solidification region forming a surface of the straight portion and a surface of the curved portion.

According to an embodiment, a color of the solidification region may be different from a color of at least one of one surface of the case body other than the surface of the straight portion and the surface of the curved portion, or the one surface of the case cover.

According to an embodiment, the vent notch portion may further include a connecting portion arranged between the straight portion and the curved portion and connecting the straight portion and the curved portion. A width of the connecting portion may be different from the width of the straight portion and the width of the curved portion.

According to an embodiment, ten-point average roughness of a surface of the vent notch portion may be higher than ten-point average roughness of at least one of the one surface of the case body or the one surface of the case cover.

According to an embodiment, the vent notch portion may further include a bottom portion forming a bottom surface of at least one of the straight portion or the curved portion, and valleys recessed deeper than the bottom portion at opposite sides of the bottom portion.

According to an embodiment, the vent notch portion may further include a groove recessed inwardly from an outer surface of at least one of the one surface of the case body or the one surface of the case cover.

According to an embodiment, a surface of the case body or a surface of the case cover which defines the groove may include a plurality of grains. The plurality of grains may be formed in an equiaxed structure.

According to an embodiment, the vent notch portion may be arranged at an outer surface of one surface of the case body which faces the case cover.

A method of manufacturing a battery cell case including a case body which accommodates an electrode assembly and a case cover which covers at least one face of the case body which is open according to embodiments of the present disclosure includes forming a vent notch portion including a straight portion and a curved portion at one surface of the battery cell case. The straight portion has a straight pattern and the curved portion is connected to the straight portion and has a curved pattern. A width of the straight portion is smaller than a width of the curved portion. A depth of the straight portion is the same as a depth of the curved portion.

According to an embodiment, forming the vent notch portion may include etching, using a laser, the one surface of the battery cell case in a first direction in which the straight pattern extends and a second direction which is perpendicular to the first direction.

According to an embodiment, in the first direction, a period in which the laser intersects the straight pattern may be greater than a period in which the laser intersects the curved pattern.

According to an embodiment, the method may further include, before forming the vent notch portion, heat treating a portion of the one surface of the battery cell case at which the vent notch portion is formed.

### BRIEF DESCRIPTION OF THE DRAWINGS

FIG. 1 is a diagram illustrating a battery cell according to an embodiment of the present disclosure;
FIG. 2 is a diagram illustrating a vent notch portion of FIG. 1;
FIG. 3 includes cross-sectional views taken along lines A-A and B-B of FIG. 2;
FIG. 4 is a diagram illustrating a vent notch portion and a case according to an embodiment of the present disclosure;
FIG. 5 is a diagram illustrating a vent notch portion and a case according to another embodiment of the present disclosure;
FIG. 6 is a diagram illustrating a vent notch portion according to another embodiment of the present disclosure;
FIG. 7 is a diagram illustrating a vent notch portion according to another embodiment of the present disclosure;
FIG. 8 is a diagram illustrating a method of manufacturing a vent notch portion according to an embodiment of the present disclosure; and
FIG. 9 is a diagram illustrating a battery cell according to another embodiment of the present disclosure.

### DETAILED DESCRIPTION

Specific structural and functional features of the present disclosure are disclosed in the context of the following embodiments of the disclosure. However, the present disclosure may be configured, arranged, or carried out differently than disclosed herein. Thus, the present disclosure is not limited to any particular embodiment nor to any specific details. Also, throughout the specification, reference to "an embodiment," "another embodiment" or the like is not necessarily to only one embodiment, and different references to any such phrase are not necessarily to the same embodiment. Moreover, the use of an indefinite article (i.e., "a" or "an") means one or more, unless it is clear that only one is intended. Similarly, terms "comprising," "including," "having" and the like, when used herein, do not preclude the existence or addition of one or more other elements in addition to the stated element(s).

It should be understood that the drawings are simplified schematic illustrations of the described devices and may not include well known details for avoiding obscuring the features of the invention.

It should also be noted that features present in one embodiment may be used with one or more features of another embodiment without departing from the scope of the invention.

It is further noted, that in the various drawings, like reference numbers designate like elements.

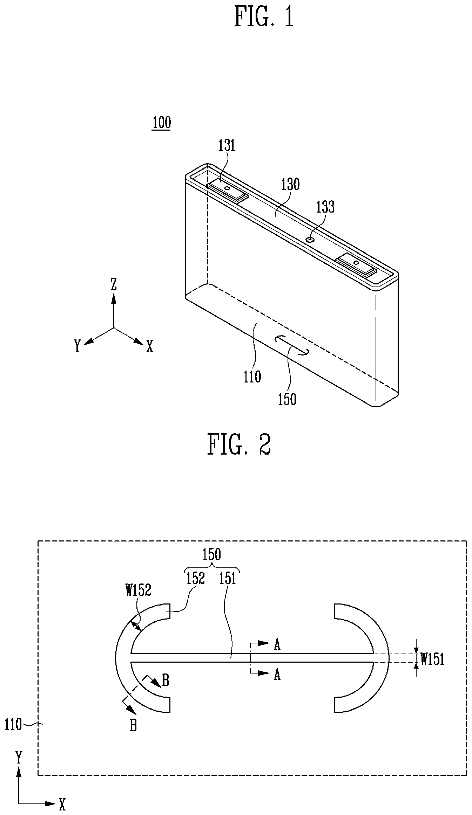

FIG. 1 is a diagram illustrating a battery cell 100 according to an embodiment of the present disclosure.

Referring to FIG. 1, the battery cell 100 according to an embodiment of the present disclosure may include a case including a case body 110 and a case cover 130.

The case body 110 and the case cover 130 may form an internal space in which an electrode assembly is accommodated. The case body 110 may include a conductive metal, such as aluminum, an aluminum alloy, or nickel-plated steel. The case body 110 may have a hexahedral shape including an opening into which the electrode assembly may be inserted. However, embodiments are not limited to the embodiment shown in FIG. 1. The shape of the case body 110 can be variously modified according to embodiments.

The case cover 130 may be coupled to the case body 110. The case cover 130 may be located over the opening in the case body 110. The case cover 130 may close the opening of the case body 110. The case cover 130 may cover the opening of the case body 110 to form the internal space in which the electrode assembly is accommodated. The case cover 130 may include an injection hole 133.

The electrode assembly may be located in the internal space of the case body 110. The electrode assembly may include a cathode, a separator, and an anode. The electrode assembly can be in various shapes as needed, such as a stacked or wound shape.

The cathode may include a cathode current collector. The anode may include an anode current collector. The current collector may include any known conductive material, provided that it does not cause a chemical reaction within a lithium secondary battery. For example, the current collector may include one of stainless steel, nickel (Ni), aluminum (Al), titanium (Ti), copper (Cu), or an alloy thereof, and may be provided in various forms, such as film, sheet, or foil.

The cathode and the anode can include an active material. The cathode may include a cathode active material and the anode may include an anode active material. The cathode active material may be a material into which lithium ions can be inserted and removed, and the anode active material may be a material into which lithium ions can be absorbed and removed. For example, the cathode active material may be a lithium metal oxide, and the anode active material may be one of carbon-based materials such as crystalline carbon, amorphous carbon, carbon composites, carbon fibers, lithium alloys, silicon (Si), or tin (Sn).

Each of the cathode and the anode may further include a binder and a conductive material for improved mechanical stability and electrical conductivity.

The separator may be configured to prevent or mitigate an electrical short between the cathode and the anode and allow the flow of ions to occur. The type of separator is not particularly limited, but may include a porous polymeric film. For example, the separator may include a porous polymeric film or a porous nonwoven fabric. In another example, the separator may include polyethylene, polypropylene, or a composite film of polyethylene and polypropylene.

An electrolyte may include an electrolyte solution. The electrolyte solution may be a non-aqueous electrolyte solution. The electrolyte solution may include a lithium salt and an organic solvent. The electrolyte solution may further include an additive. The additive may form a film on the cathode or the anode through a chemical reaction in the battery. For example, a cathode interface film may be formed on the cathode and an anode interface film may be formed on the anode.

After the case body 110 and the case cover 130 are coupled, the electrolyte solution may be injected into the case body 110 through the injection hole 133. The injection hole 133 may be sealed by a sealing stopper after the electrolyte solution is injected.

A vent notch portion 150 may be arranged on one surface of the case including the case body 110 and the case cover 130 to allow the adjustment of the internal pressure of the battery cell 100. The vent notch portion 150 may be formed by being recessed at at least one of one surface of the case body 110 or one surface of the case cover 130.

For example, the vent notch portion 150 may be arranged on one surface of the case body 110. In another example, the vent notch portion 150 may be arranged on one surface of the case cover 130. When the internal pressure of the battery cell 100 reaches the predetermined pressure, the vent notch portion 150 may be cut to open the vent notch portion 150. The vent notch portion 150 may include a groove recessed from an outer surface of the case toward the inside of the case. For example, the vent notch portion 150 may include a groove recessed inwardly from an outer surface of at least one of one surface of the case body 110 or one surface of the case cover 130.

In FIG. 1, the vent notch portion 150 may be arranged at an outer surface of one surface of the case body 110 that faces the case cover 130, but embodiments are not limited thereto. For example, the vent notch portion 150 may be arranged at the case cover 130. Hereinafter, the vent notch portion 150 is described as being arranged at the case body 110. Accordingly, while the following description is provided relative to the case body 110, when the vent notch portion 150 is arranged at the case cover 130, the description of the case body 110 with respect to the vent notch portion 150 may apply substantially the same to the case cover 130.

External terminals 131 may be arranged on the case cover 130. The external terminals 131 may be spaced apart from each other in a first direction X on one surface of the case cover 130. The external terminals 131 may be exposed at the top of the case cover 130. The external terminals 131 may connect the electrode assembly accommodated in the case body 110 to an external power source.

FIG. 2 is a diagram illustrating the vent notch portion 150 of FIG. 1.

Referring to FIG. 2, the vent notch portion 150 may include a straight portion 151 and a curved portion 152. The straight portion 151 may have a straight pattern and the curved portion 152 may have a curved pattern.

The straight portion 151 may be arranged between a plurality of curved portions 152, connecting the plurality of curved portions 152 to each other. The straight portion 151 may extend between the plurality of curved portions 152. For example, the straight portion 151 may extend in the first direction X from one surface of the case body 110.

The straight portion 151 may have a first width W151. The first width W151 may refer to a width in a direction perpendicular to the direction in which the straight portion 151 extends, i.e., the first width W151 of the straight portion 151 may refer to the width of the straight portion 151 in a second direction Y.

The curved portion 152 may be connected to the straight portion 151. The curved portion 152 may be connected to each of opposite ends of the straight portion 151 in the direction in which the straight portion 151 extends. In a plan view, the curved portion 152 may have a curved shape, rather than extending in a straight line in a particular direction.

The curved portion 152 may have a shape that curves away from one end of the straight portion 151 at opposite sides. For example, one curved portion 152 connected to one end of the straight portion 151 may have a semicircular ring shape that is symmetrical with respect to the straight portion 151, i.e., the one end of the straight portion 151 may be connected to the center of the semicircular ring shape of the curved portion 152. The plurality of curved portions 152 connected to opposite ends of the straight portion 151 may have a semicircular ring shape that is symmetrical to each other in the direction perpendicular to the direction in which the straight portion 151 extends.

The curved portion 152 may have a second width W152. The second width W152 may refer to a width in a direction perpendicular to a direction of extension of a tangent line at one point on a boundary of the curved portion 152.

The first width W151 of the straight portion 151 and the second width W152 of the curved portion 152 may be different. For example, on one surface of the case body 110 at which the vent notch portion 150 is formed, the first width W151 of the straight portion 151 may be smaller than the second width W152 of the curved portion 152.

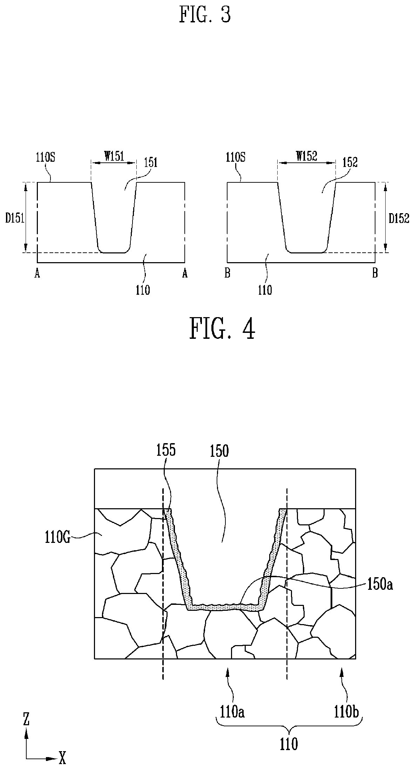

FIG. 3 includes cross-sectional views taken along lines A-A and B-B of FIG. 2.

Referring to FIG. 3, the straight portion 151 and the curved portion 152 may include grooves that recessed from one surface 110S of a case body. The one surface 110S of the case body may be the outer surface of the case body 110.

The first width W151 of the straight portion 151 may be a width of the straight portion 151 on the one surface 110S of the case body. The first width W151 may be the maximum width of the straight portion 151, but embodiments are not limited thereto.

The second width W152 of the curved portion 152 may be a width of the curved portion 152 at the one surface 110S of the case body. The second width W152 may be the maximum width of the curved portion 152, but embodiments are not limited thereto.

The first width W151 of the straight portion may be different from the second width W152 of the curved portion. On the one surface 110S of the case body, the first width W151 of the straight portion 151 may be smaller than the second width W152 of the curved portion 152, i.e., a width of a mouth of the groove included in the straight portion 151 may be smaller than a width of a mouth of the groove included in the curved portion 152.

Each of the straight portion 151 and the curved portion 152 may have a shape that gradually decreases in width along the depth direction from the one surface 110S of the case body. However, embodiments are not limited thereto. For example, the width of each of the straight portion 151 and the curved portion 152 at a midpoint in the depth direction of the straight portion 151 and the curved portion 152 may be greater than the width of each of the straight portion 151 and the curved portion 152 at the one surface 110S of the case body.

The depth direction of the straight portion 151 and the curved portion 152 may refer to a direction perpendicular to the one surface 110S of the case body at which the straight portion 151 and the curved portion 152 are formed. For example, when the one surface 110S of the case body at which the straight portion 151 and the curved portion 152 are formed is a plane defined by the first direction X in FIG. 2 and the second direction Y in FIG. 2, the depth direction of the straight portion 151 and the curved portion 152 may be a third direction Z in FIG. 1.

The straight portion 151 may have a first depth D151. For example, the first depth D151 of the straight portion 151 may refer to a depth from the one surface 110S of the case body at which the straight portion 151 is formed to the maximum depth point of the straight portion 151. The curved portion 152 may have a second depth D152. For example, the second depth D152 of the curved portion 152 may refer to a depth from the one surface 110S of the case body at which the curved portion 152 is formed to the maximum depth point of the curved portion 152.

The first depth D151 of the straight portion 151 may be the same as the second depth D152 of the curved portion 152, i.e., the maximum depth point of the straight portion 151 and the maximum depth point of the curved portion 152 may be arranged at substantially the same depth from the one surface 110S of the case body.

FIG. 4 is a diagram illustrating the vent notch portion 150 and the case according to an embodiment of the present disclosure.

For reference, FIG. 4 is a schematic illustration of a cross-section of the case taken by Electron Back Scatter Diffraction (EBSD). The EBSD is a method of analyzing the orientation of a material by detecting the electrons that are reflected when accelerated electrons are injected into a sample using a scanning electron microscope equipped with a backscatter electron diffraction pattern analyzer, which allows analysis of the crystal structure of the case.

Referring to FIG. 4, the case body 110 may include a plurality of grains 110G. The plurality of grains 110G may be formed in an equiaxed structure. For example, a surface of the case body 110 that defines the recessed groove of the vent notch portion 150 may include the plurality of grains 110G formed in an equiaxed structure, i.e., the plurality of grains 110G may be non-directional and have similar lengths about a plurality of axes.

The above-described feature may be attributed to the heating of the case body 110 during the process of forming the recessed groove of the vent notch portion 150, causing the plurality of grains 110G to grow side-by-side with respect to a plurality of axial directions. Before forming the recessed groove of the vent notch portion 150, a portion of the case body 110 at which the vent notch portion 150 is formed may be heat treated and then laser etched to form the recessed groove of the vent notch portion 150. Thus, the case body 110 may be heated during the heat treatment process so that the plurality of grains 110G may be formed in the equiaxed structure.

The case body 110 may include a first portion 110a at which the vent notch portion 150 is formed and a second portion 110b at which the vent notch portion 150 is not formed. The first portion 110a may overlap the vent notch portion 150. The second portion 110b may not overlap the vent notch portion 150. The second portion 110b may include an area other than the first portion 110a.

The size of the plurality of grains 110G in the first portion 110a and the size of the plurality of grains 110G in the second portion 110b may be uniform. For example, the standard deviation of the size of the plurality of grains 110G in the first portion 110a and the size of the plurality of grains 110G in the second portion 110b may be 20 or less. Because the vent notch portion 150 is etched using a laser without pressurizing the case body 110, the size of the plurality of grains 110G may be uniform across a portion of the case body 110 where the vent notch portion 150 is formed and a portion where the vent notch portion 150 is not formed.

The vent notch portion 150 may include a solidification region 155. The solidification region 155 may form a surface of the vent notch portion 150. For example, the solidification region 155 may form a surface of the straight portion 151 in FIG. 3 and the curved portion 152 in FIG. 3. The solidification region 155 may be formed as the case body 110 is etched using a laser to form the vent notch portion 150. The solidification region 155 may be formed as the case body 110 is heated and melted by the laser and then re-solidified.

The color of the solidification region 155 may be different from the color of a surface of the case body 110 on which the vent notch portion 150 is not formed. For example, the color of the solidification region 155 may be different from the color of a surface of the case body 110 other than the surface of the vent notch portion 150. The color of the solidification region 155 may be different from the color of one surface of the case body 110 other than the surface of the straight portion 151 in FIG. 3 and the surface of the curved portion 152 in FIG. 3. For example, the color of the solidification region 155 may be darker than the color of the surface of the case body 110 at which the vent notch portion 150 is not formed, which can be attributed to the discoloration of the solidification region 155 as the case body 110 is heated and melted by the laser and then re-solidified.

The ten-point average roughness Rz of the surface of the vent notch portion 150 may be higher than the ten-point average roughness Rz of the surface of the case body 110 other than the vent notch portion 150. The surface of the case body 110 other than the vent notch portion 150 may refer to an outer surface. The ten-point average roughness Rz of the surface of the vent notch portion 150 may be higher than the ten-point average roughness of one surface of the case body 110.

The ten-point average roughness is a numerical value of the roughness of the surface. Known methods of measuring roughness can be used to measure the roughness of the surface of the vent notch portion 150 and the surface of the case body 110. As a result, the measured ten-point average roughness of the surface of the vent notch portion 150 may be higher than the ten-point average roughness of the surface of the case body 110 where the vent notch portion 150 is not formed. In other words, the surface of the vent notch portion 150 may be rougher than the surface of the case body 110 where the vent notch portion 150 is not formed.

This can be attributed to the fact that the vent notch portion 150 is formed using a laser. When the vent notch portion 150 is formed by a pressurization method but not a laser, the surface of the vent notch portion 150 pressurized may be flat. On the other hand, when the vent notch portion 150 is formed by a laser, the surface of the vent notch portion 150 may be rough during the etching process. For example, the ten-point average roughness of the surface of the vent notch portion 150 may exceed 20.

The vent notch portion 150 may include a bottom portion 150a. The bottom portion 150a may form a bottom surface of the vent notch portion 150. For example, the bottom portion 150a may form a bottom surface of at least one of the straight portion 151 in FIG. 3 or the curved portion 152 in FIG. 3. The bottom portion 150a may include the bottom surface of the straight portion 151 of FIG. 3. The bottom portion 150a may include the bottom surface of the curved portion 152 in FIG. 3.

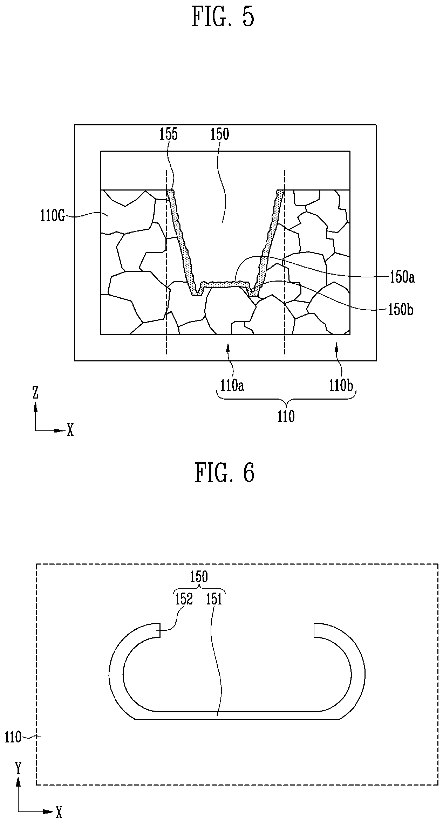

FIG. 5 is a diagram illustrating the vent notch portion 150 and the case according to another embodiment of the present disclosure. By way of example, differences from those described with reference to FIG. 4 will be mainly described.

Referring to FIG. 5, the vent notch portion 150 may include the bottom portion 150a and valleys 150b. The valleys 150b may be recessed deeper than the bottom portion 150a at opposite sides of the bottom portion 150a. The valleys 150b may be arranged at opposite sides of the bottom portion 150a in the width direction of the vent notch portion 150, i.e., the depth from one surface of the case body 110 to the valley 150b may be greater than the depth from one surface of the case body 110 to the bottom portion 150a, which may be attributed to the fact that during the process of forming the vent notch portion 150 with a laser, heat is concentrated at the corners of the groove of the vent notch portion 150.

FIG. 6 is a diagram illustrating the vent notch portion 150 according to another embodiment of the present disclosure. By way of example, differences from those described with reference to FIG. 2 will be mainly described.

Referring to FIG. 6, the straight portion 151 may be connected to an end that is not in the center of the semicircular ring shape of the curved portion 152. The curved portion 152 may be bent from opposite ends of the straight portion 151 to one side. One curved portion 152 connected to one end of the straight portion 151 may not be symmetrical with respect to the straight portion 151, i.e., the curved portion 152 may be arranged at one side only and not on the other side relative to the direction in which the straight portion 151 extends.

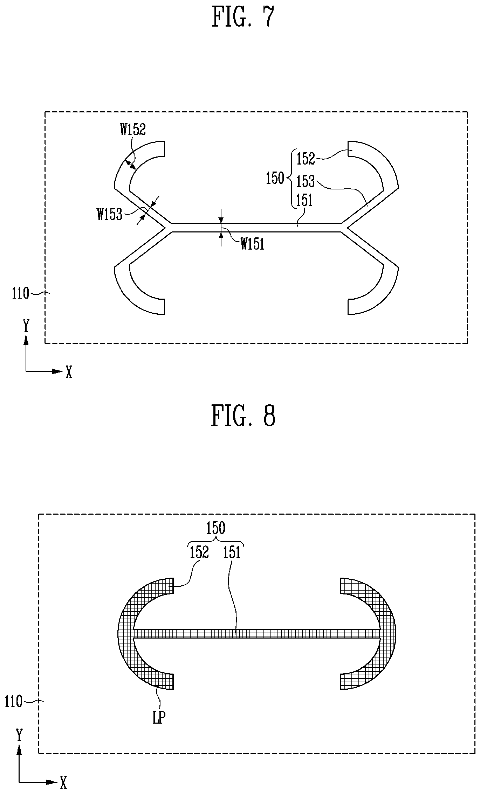

FIG. 7 is a diagram illustrating the vent notch portion 150 according to another embodiment of the present disclosure. By way of example, differences from those shown in FIG. 2 will be mainly described.

Referring to FIG. 7, the vent notch portion 150 may include a connecting portion 153 connecting the straight portion 151 and the curved portion 152. The connecting portion 153 may be arranged between the straight portion 151 and the curved portion 152.

The connecting portion 153 may have a third width W153. The third width W153 of the connecting portion 153 may be different from the first width W151 of the straight portion 151 and the second width W152 of the curved portion 152. For example, the third width W153 of the connecting portion 153 may be smaller than each of the first width W151 of the straight portion 151 and the second width W152 of the curved portion 152. In another example, the third width W153 of the connecting portion 153 may be greater than the first width W151 of the straight portion 151 and smaller than the second width W152 of the curved portion 152. The depth of the connecting portion 153 may be the same as the depth of the straight portion 151 and the depth of the curved portion 152.

In FIG. 7, it is illustrated that the connecting portion 153 has a straight line pattern, but embodiments are not limited thereto. For example, the connecting portion 153 may have a curved pattern.

FIG. 8 is a diagram illustrating a method of manufacturing the vent notch portion 150 according to an embodiment of the present disclosure. By way of example, differences from those described with reference to FIG. 2 will be mainly described.

Referring to FIG. 8, a method of manufacturing a battery cell case may include forming, at one surface of the battery cell case, the vent notch portion 150 including the straight portion 151 having a straight pattern and the curved portion 152 connected to the straight portion 151 and having a curved pattern. Further, the method of manufacturing the battery cell case may include, before forming the vent notch portion 150, heat treating a portion of one surface of the battery cell case at which the vent notch portion 150 is formed.

The vent notch portion 150 may be formed by laser etching one surface of the case body 110 of FIG. 1 or one surface of the case cover 130 of FIG. 1 along a laser pattern LP to form a groove.

The laser pattern LP may extend in the direction in which the straight portion 151 extends and in a direction perpendicular thereto. For example, the laser pattern LP may include a plurality of straight patterns extending in the first direction X and the second direction Y. In other words, forming the vent notch portion may include etching one surface of the battery cell case with a laser in the first direction X and the second direction Y.

The laser forming the vent notch portion 150 may etch, by heating and melting, one surface of the case body 110 of FIG. 1 or one surface of the case cover 130 of FIG. 1 at which the vent notch portion 150 is formed, along the laser pattern LP.

In the first direction X in which the straight portion 151 extends, a period in which the laser intersects the straight pattern of the straight portion 151 along the laser pattern LP may be greater than a period in which the laser intersects the curved pattern of the curved portion 152. Therefore, in the direction in which the straight portion 151 extends, the curved pattern of the curved portion 152 that the laser intersects more than the straight pattern of the straight portion 151 may be etched relatively more than the straight pattern of the straight portion 151. Therefore, by making the width of the curved portion 152 larger than the width of the straight portion 151, the depth of the curved portion 152 and the depth of the straight portion 151 may be uniformly etched.

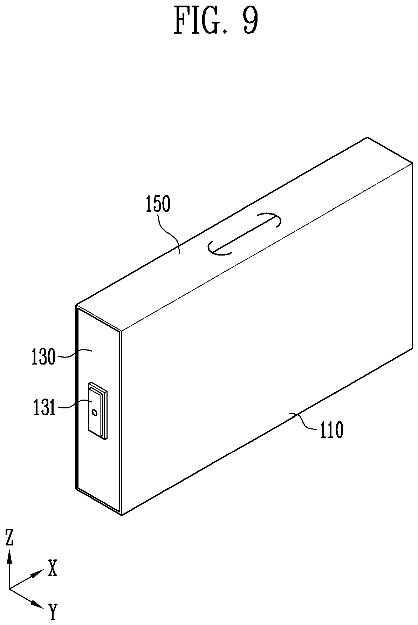

FIG. 9 is a diagram illustrating a battery cell according to another embodiment of the present disclosure. By way of example, differences from those described with reference to FIG. 1 will be mainly described.

Referring to FIG. 9, the vent notch portion 150 may be arranged at one surface of the case body 110 adjacent to the case cover 130. The plurality of external terminals 131 may be arranged on the case covers 130, each closing an opening face of the case body 110 that is open in the first direction X and facing each other.
Some of the aspects of the present disclosure are as follows:
Aspect 1: A battery cell (100), comprising:
   a case body (110) accommodating an electrode assembly;
   a case cover (130) covering at least one surface of the case body (110) which is open; and
   a vent notch portion (150) formed by being recessed in at least one of one surface (110S) of the case body (110) or one surface of the case cover (130),
   wherein the vent notch portion (150) includes:
      a straight portion (151) having a straight pattern; and
      a curved portion (152) connected to the straight portion (151) and having a curved pattern, and
      wherein a width of the straight portion (151) is different from a width of the curved portion (152).
Aspect 2: The battery cell (100) according to aspect 1, wherein the width of the straight portion (151) is smaller than the width of the curved portion (152) at the one surface (110S) of the case body (110) or the one surface of the case cover (130) at which the vent notch portion (150) is formed.
Aspect 3: The battery cell (100) according to aspect 1 or 2, wherein a depth of the straight portion (151) is the same as a depth of the curved portion (152).
Aspect 4: The battery cell (100) according to any one of aspects 1 to 3, wherein the vent notch portion (150) further includes a solidification region (155) forming a surface of the straight portion (151) and a surface of the curved portion (152).
Aspect 5: The battery cell (100) according to aspect 4, wherein a color of the solidification region (155) is different from a color of at least one of one surface (110S) of the case body (110) other than the surface of the straight portion (151) and the surface of the curved portion (152), or the one surface of the case cover (130).
Aspect 6: The battery cell (100) according to any one of the preceding aspects, wherein the vent notch portion (150) further includes a solidification region (153) arranged between the straight portion (151) and the curved portion (152) and connecting the straight portion (151) and the curved portion (152), and
   wherein a width of the solidification region (153) is different from the width of the straight portion (151) and the width of the curved portion (152).
Aspect 7: The battery cell (100) according to any one of the preceding aspects, wherein ten-point average roughness of a surface of the vent notch portion (150) is higher than ten-point average roughness of at least one of the one surface (110S) of the case body (110) or the one surface of the case cover (130).
Aspect 8: The battery cell (100) according to any one of the preceding aspects, wherein the vent notch portion (150) further includes:
   a bottom portion (150a) forming a bottom surface of at least one of the straight portion (151) or the curved portion (152); and
   valleys (150b) recessed deeper than the bottom portion (150a) at opposite sides of the bottom portion (150a).
Aspect 9: The battery cell (100) according to any one of the preceding aspects, wherein the vent notch portion (150) further includes a groove recessed inwardly from an outer surface of at least one of the one surface (110S) of the case body (110) or the one surface of the case cover (130).
Aspect 10: The battery cell (100) according to aspect 9, wherein a surface of the case body (110) or a surface of the case cover (130) which defines the groove includes a plurality of grains (110G), and
   wherein the plurality of grains (110G) are formed in an equiaxed structure.
Aspect 11: The battery cell (100) according to any one of the preceding aspects, wherein the vent notch portion (150) is arranged at an outer surface of one surface (110S) of the case body (110) which faces the case cover (130).
Aspect 12: A method of manufacturing a battery cell (100) case including a case body (110) which accommodates an electrode assembly and a case cover (130) which covers at least one surface of the case body (110) which is open, the method comprising:
   forming a vent notch portion (150) including a straight portion (151) and a curved portion (152) at one surface of the battery cell (100) case, wherein the straight portion (151) has a straight pattern and the curved portion (152) is connected to the straight portion (151) and has a curved pattern,
   wherein a width of the straight portion (151) is smaller than a width of the curved portion (152), and
   wherein a depth of the straight portion (151) is the same as a depth of the curved portion (152).
Aspect 13: The method according to aspect 12, wherein forming the vent notch portion (150) includes:
   etching, using a laser, the one surface of the battery cell (100) case in a first direction in which the straight pattern extends and a second direction which is perpendicular to the first direction.
Aspect 14: The method according to aspect 13, wherein, in the first direction, a period in which the laser intersects the straight pattern is greater than a period in which the laser intersects the curved pattern.
Aspect 15: The method according to any one of aspects 12 to 14, further comprising, before forming the vent notch portion (150), heat treating a portion of the one surface of the battery cell (100) case at which the vent notch portion (150) is formed.

The present disclosure is not limited to the embodiments described above, as the present disclosure may be implemented and modified in various forms. Accordingly, when modifications of the embodiments include components of the present disclosure, such modifications should be considered to fall within the scope of the present disclosure.

According to some embodiments of the present disclosure, the internal pressure of a battery cell may be adjusted, thereby improving the stability.

According to some embodiments of the present disclosure, the production efficiency of the battery cell may be improved.

According to some embodiments of the present disclosure, the production efficiency may be improved by manufacturing a vent notch portion integrally with a case.

## Claims

1. A battery cell (100), comprising:
a case body (110) accommodating an electrode assembly;
a case cover (130) covering at least one face of the case body (110) which is open; and
a vent notch portion (150) formed by being recessed at at least one of one surface (110S) of the case body (110) or one surface of the case cover (130),
wherein the vent notch portion (150) includes:
a straight portion (151) having a straight pattern; and
a curved portion (152) connected to the straight portion (151) and having a curved pattern, and
wherein a width of the straight portion (151) is different from a width of the curved portion (152).

2. The battery cell (100) according to claim 1, wherein the width of the straight portion (151) is smaller than the width of the curved portion (152) at the one surface (110S) of the case body (110) or the one surface of the case cover (130) at which the vent notch portion (150) is formed.

3. The battery cell (100) according to claim 1 or 2, wherein a depth of the straight portion (151) is the same as a depth of the curved portion (152).

4. The battery cell (100) according to any one of claims 1 to 3, wherein the vent notch portion (150) further includes a solidification region (155) forming a surface of the straight portion (151) and a surface of the curved portion (152).

5. The battery cell (100) according to claim 4, wherein a color of the solidification region (155) is different from a color of at least one of one surface (110S) of the case body (110) other than the surface of the straight portion (151) and the surface of the curved portion (152), or the one surface of the case cover (130).

6. The battery cell (100) according to any one of the preceding claims, wherein the vent notch portion (150) further includes a solidification region (153) arranged between the straight portion (151) and the curved portion (152) and connecting the straight portion (151) and the curved portion (152), and
wherein a width of the solidification region (153) is different from the width of the straight portion (151) and the width of the curved portion (152).

7. The battery cell (100) according to any one of the preceding claims, wherein ten-point average roughness of a surface of the vent notch portion (150) is higher than ten-point average roughness of at least one of the one surface (110S) of the case body (110) or the one surface of the case cover (130).

8. The battery cell (100) according to any one of the preceding claims, wherein the vent notch portion (150) further includes:
a bottom portion (150a) forming a bottom surface of at least one of the straight portion (151) or the curved portion (152); and
valleys (150b) recessed deeper than the bottom portion (150a) at opposite sides of the bottom portion (150a).

9. The battery cell (100) according to any one of the preceding claims, wherein the vent notch portion (150) further includes a groove recessed inwardly from an outer surface of at least one of the one surface (110S) of the case body (110) or the one surface of the case cover (130).

10. The battery cell (100) according to claim 9, wherein a surface of the case body (110) or a surface of the case cover (130) which defines the groove includes a plurality of grains, and
wherein the plurality of grains are formed in an equiaxed structure.

11. The battery cell (100) according to any one of the preceding claims, wherein the vent notch portion (150) is arranged at an outer surface of one surface (110S) of the case body (110) which faces the case cover (130).

12. A method of manufacturing a battery cell (100) case including a case body (110) which accommodates an electrode assembly and a case cover (130) which covers at least one face of the case body (110) which is open, the method comprising:
forming a vent notch portion (150) including a straight portion (151) and a curved portion (152) at one surface of the battery cell (100) case, wherein the straight portion (151) has a straight pattern and the curved portion (152) is connected to the straight portion (151) and has a curved pattern,
wherein a width of the straight portion (151) is smaller than a width of the curved portion (152), and
wherein a depth of the straight portion (151) is the same as a depth of the curved portion (152).

13. The method according to claim 12, wherein forming the vent notch portion (150) includes:
etching, using a laser, the one surface of the battery cell (100) case in a first direction in which the straight pattern extends and a second direction which is perpendicular to the first direction.

14. The method according to claim 13, wherein, in the first direction, a period in which the laser intersects the straight pattern is greater than a period in which the laser intersects the curved pattern.

15. The method according to any one of claims 12 to 14, further comprising, before forming the vent notch portion (150), heat treating a portion of the one surface of the battery cell (100) case at which the vent notch portion (150) is formed.
